Europäisches Patentamt

**European Patent Office**

Office européen des brevets

(11) Veröffentlichungsnummer: **0 018 526**
**B1**

(12) **EUROPÄISCHE PATENTSCHRIFT**

(45) Veröffentlichungstag der Patentschrift:
27.07.83

(21) Anmeldenummer: 80101962.1

(22) Anmeldetag: 11.04.80

(51) Int. Cl.³: **H 04 Q 11/04, H 04 J 3/12**

(54) Verfahren zum Betreiben von digitalen Hauptanschlüssen und/oder Nebenstellenanlagen an einer PCM-Vermittlungsstelle.

(30) Priorität: 30.04.79 DE 2917572

(43) Veröffentlichungstag der Anmeldung:
12.11.80 Patentblatt 80/23

(45) Bekanntmachung des Hinweises auf die Patenterteilung:
27.07.83 Patentblatt 83/30

(84) Benannte Vertragsstaaten:
AT BE FR GB IT

(73) Patentinhaber: Telefonbau und Normalzeit GmbH,
Mainzer Landstrasse 128-146 Postfach 4432,
D-6000 Frankfurt (Main) (DE)

(72) Erfinder: Agricola, Manfred, Dipl.-Ing., Rhönstrasse 15,
D-6368 Bad Vilbel (DE)
Erfinder: Kessler, Arthur, Ing. grad., Mauerfeldstrasse 4,
D-6370 Oberursel 5 (DE)
Erfinder: Reinhold, Andreas, Jägerstrasse 9, D-6457,
Maintal 3 (DE)
Erfinder: Schmid, Adolf, Ing. grad., Hammarskjöldring 27,
D-6000 Frankfurt 50 (DE)

(56) Entgegenhaltungen:
DE-A-2 348 681
DE-A-2 643 703
THE INTERNATIONAL SYMPOSIUM ON SUB-
SCRIBER LOOPS AND SERVICES; 20.—24. März
1978, Seiten 190—194 IEEE New York, U. S. A.
G. N. LAWRENCE et al.: »Digital service to the
subscriber«
1978 INTERNATIONAL ZÜRICH SEMINAR ON
DIGITAL COMMUNICATIONS; 7.—9. März 1978,
Seiten D3.1 -D3.5 IEEE New York, U. S. A. D. F.
BOWMAN et al.: »Studies for a subscriber's
digital telephone terminal«

INTERNATIONAL SWITCHING SYMPOSIUM
25.—29. Oktober 1976, Seiten 231-1-1-231-1-7, IECE
of Japan Tokyo, JP. G. N. LAWRENCE et al.:
»Design philosophies for local digital switching«
TECHNISCHE MITTEILUNGEN PTT, 12/1973, Seiten 554—578 Bern, CH. K. E. WUHRMANN: »Das
integrierte PCM-Fernmeldesystem IFS-1«
1978 INTERNATIONAL ZÜRICH SEMINAR OR
DIGITAL COMMUNICATIONS; 7.—9. März 1978,
IEEE, Seiten C5.1—C5.4 New York, U. S. A. T.
SVENSSON: »Methods for two-wire duplex
digital transmission at 80 kbit/s on subscriber
lines«

**0 018 526**

Verfahren zum Betreiben von digitalen Hauptanschlüssen und/oder Nebenstellenanlagen
an einer PCM-Vermittlungsstelle

Die Erfindung betrifft ein Verfahren zum Betreiben von digitalen Hauptanschlüssen und/oder Nebenstellanlagen an einer PCM-Vermittlungsstelle, wobei deren Anschlußleitungen an Leitungsverzweigern angeschlossen sind und jeweils ein Leitungsverzweiger eine Leitungsschaltung als Schnittstelle zum PCM-Leitungssystem zur Verbindung mit der Vermittlungsstelle aufweist und die Zeitkanäle des PCM-Leitungssystems durch einen Demultiplexer aufgeteilt und die darin enthaltenen Informationen auf die betreffenden Anschlußleitungen weitergegeben und die auf diesen eintreffenden Informationen durch einen Multiplexer dem betreffenden Zeitkanal des PCM-Leitungssystems übermittelt werden, und mit den an den Anschlußleitungen angeschlossenen Hauptanschlüssen und/oder Nebenstellenanlagen Zusatzeinrichtungen (z. B. Zweitapparate, Nebenstellen, usw.) über interne Anschlußleitungen verbunden sind und alle auf der Anschlußleitung ankommende Informationen auf die interne Anschlußleitung weitergeben werden und umgekehrt, wobei auf den Anschlußleitungen Datenworte übermittelt werden, welche jeweils aus einem PCM-Wort und weiteren Bit-Stellen zur Übermittlung zusätzlicher Informationen (z. B. Synchronisationszeichen, Signalisierungszeichen, Gebührenimpulse) bestehen und die Bit-Rate auf den Anschlußleitungen entsprechend höher liegt als die normale Übertragungsgeschwindigkeit auf PCM-Ein- oder Mehrkanalleitungen und die Signalisierungszeichen auf dem PCM-Leitungssystem in beiden Richtungen in dem betreffenden Signalisierungskanal übertragen werden, während die auf der Anschlußleigung benötigte Synchronisationszeichen von der Weitergabe auf das PCM-Leitungssystem ausgeschlossen sind.

Es ist bereits bekannt, zur Konzentration des Verkehrs von der Teilnehmerleitung auf ein Maß, welches eine wirtschaftliche Übertragung über mittlere Distanzen und Richtungsdurchschaltung erlaubt, die Teilnehmeranschlußleitungen über einen Konzentrator an der eigentlichen Vermittlungsstelle anzuschließen. In der Zeitschrift »Technische Mitteilungen PTT« 12/1973 wird auf den Seiten 554 bis 578 ein integriertes PCM-Fernmeldesystem beschrieben, bei welchem digitale Fernsprechapparate, Datenterminale, Faksimilegeräte usw. an sogenannten Digitalkonzentratoren angeschlossen sind. Auf der digitalen Teilnehmeranschlußleitung wird ein 10-Bit-Code benutzt, welcher zur Übertragung der PCM-Worte mit einer Länge von 8 Bit und von weiteren 2 Bit zur Übertragung von Code-Kombinationen für die Signalisierung dient.

Dem CCITT-Dokument GM/NRD-No. 64-E mit dem Titel »ENVELOPE STRUCTURE AND DIGITAL SUBSCRIBER LINE«, welches ebenfalls eine digitale Teilnehmeranschlußleitung betrifft, lassen sich weitere Hinweise bezüglich der Übertragung der PCM-Datenworte und zusätzlicher Bit-Stellen für die Übermittlung von Signalisierungsinformationen entnehmen. Die Bitrate zur Übermittlung der PCM-Worte auf einer sogenannten 1-Kanal-Teilnehmeranschlußleitung beträgt 64 kBit/s, werden nun zusätzliche Bit-Stellen mit jeden PCM-Wort übertragen und wird dabei die Abtastgeschwindigkeit von 8 kHz beibehalten, so ergibt sich eine Bitrate von 80 kBit/s.

In der Druckschrift INTERNATIONAL SWITCHING SYMPOSIUM 1976 wird auf Seite 231-1-5 ein Übertragungsverfahren für eine Anschlußleitung zwischen einer digitalen Teilnehmerstation und einem digitalen Konzentrator beschrieben, bei welchem ebenfalls jedem PCM-Wort zwei weitere Bit-Stellen hinzugefügt werden, wobei diese zusätzlichen Bit-Stellen zur Übermittlung von Signalisierungsinformationen, Synchronisationszeichen, Gebührenimpulsen usw. verwendet werden und die Synchronisationszeichen in dem Konzentrator ausgeblendet werden.

Es ist bereits vorgeschlagen worden, an einem als Hauptanschluß eingesetzten digitalen Fernsprechapparat eine interne Anschlußleitung zum Betreiben eines Zweitweckers, eines Zweitapparates, von Datenendgeräten usw. anzuschließen, wobei alle auf der Hauptanschlußleitung eintreffenden Informationen auf die interne Anschlußleitung weitergegeben werden und die auf dieser auftretenden Informationen auch wiederum auf die Hauptanschlußleitung weitergegeben werden.

Die Aufgabe der Erfindung besteht nun darin, ein Verfahren anzugeben, welches die Übermittlung zusätzlicher Informationen ermöglicht, die zum Betreiben von Anschlußleitungen und internen Anschlußleitungen benötigt werden.

Diese Aufgabe wird dadurch gelöst, daß auf den Anschlußleitungen und den internen Anschlußleitungen das gleiche Rahmenformat benutzt wird, wobei die zusätzlichen Bit-Stellen zur Übermittlung von internen Signalisierungszeichen, externen Signalisierungszeichen, Synchronisationszeichen und eines zusätzlichen Dienstkanals für die Übertragung auf den Anschlußleitungen und den internen Anschlußleitungen bereitgestellt werden, wobei die internen Signalisierungszeichen, die nur auf der internen Anschlußleitung benutzt werden, und die Synchronisationszeichen von der Weitergabe an die Vermittlungsstelle im Leitungsverzweiger ausgeschlossen sind, während der Dienstkanal auf einen Zeitkanal des PCM-Leitungssystems umgesetzt wird und umgekehrt.

Damit wird erreicht, daß sowohl auf den Anschlußleitungen als auch auf den internen Anschlußleitungen ein einheitliches Rahmenformat benutzt wird, wobei auch die internen Signalisierungszeichen, die nur auf der internen Anschlußleitung benötigt werden, auf die Anschlußleitung bis zum Leitungsverzweiger gelangen. In den digitalen Fernsprechteilnehmerstatio-

2

**0 018 526**

nen, digitalen Nebenstellananlagen, usw. ist lediglich eine Überwachung jedoch keine Ausblendung dieser Signalisierungszeichen notwendig, wodurch sich ein einfacherer Steuerungsaufbau ergibt.

Eine vorteilhafte Weiterbildung der Erfindung besteht darin, daß die durch die beiden zusätzlichen Bit-Stellen innerhalb eines Rahmens, gebildet aus 16 Datenworten, vorhandenen 32 Bit-Stellen übertragbaren Informationen folgendermaßen aufgeteilt sind:

a) externe Signalisierung — 4 Bit
b) interne Signalisierung — 8 Bit
c) Synchronisationszeichen — 4 Bit
d) Dienstkanal — 16 Bit.

Bei einem Rahmen, gebildet aus 16 Datenworten, kann das externe Signalisierungszeichen mit einer Länge von 4 Bit ohne Schwierigkeiten in den betreffenden Signalisierungskanal des PCM-Leitungssystems eingeführt werden, da dieser bekanntlich nach jeweils 16 Rahmen einem Zeitkanal zur Verfügung steht. Der Dienstkanal dient zur zusätzlichen und gleichzeitigen Übermittlung von Informationen, welche für Datenendgeräte des betreffenden Hauptanschlusses bestimmt sind bzw. von diesen erzeugt werden.

Eine Weiterbildung der Erfindung besteht auch darin, daß die durch die beiden zusätzlichen Bit-Stellen innerhalb eines Rahmens, gebildet aus 16 Datenworten, vorhandenen 32 Bit-Stellen übertragbaren Informationen folgendermaßen aufgeteilt sind:

a) externe Signalisierung — 4 Bit
b) interne Signalisierung — 4 Bit
c) externe Synchronisation — 4 Bit
d) interne Synchronisation — 4 Bit
e) Dienstkanal — 16 Bit,

wobei die unter b) und d) aufgeführten Informationen von der Weitergabe an die Vermittlungsstelle ausgeschlossen sind. Durch die Verwendung von zusätzlichen 4 Bit für die Übermittlung von Synchronisationszeichen auf der Anschlußleitung wird eine größere Sicherheit bei der Erkennung der Synchronisationszeichen erreicht, da auf der Anschlußleitung mit erhöhten Störungen gerechnet werden muß.

Eine vorteilhafte Weiterbildung der Erfindung besteht auch darin, daß der Dienstkanal durch einen in die Anschlußleitung eingeschleiften Anschlußverzweiger hinzugefügt oder ausgeblendet wird und die auf dem Dienstkanal übertragbaren Informationen auf eine besondere Leitung einer oder mehreren, dem betreffenden Hauptanschluß zugeordneten Einrichtungen übermittelt werden und die von dort eintreffenden Informationen auf dem Dienstkanal weitergegeben werden. Bei den Einrichtungen kann es sich beispielsweise um Einbruchs-, Feuer- oder Notruf-Melder oder auch um eine automatische Ableseeinrichtung von Haushaltszählern oder auch eine Sirenensteuerung handeln.

Eine Weiterbildung der Erfindung besteht auch darin, daß für die externe Signalisierung 8 Bit verwendet werden und zur Übermittlung an die Vermittlungsstelle auf dem PCM-Leitungssystem jeweils ein doppelter Überrahmen benutzt wird, wobei das Vorzeichenbit des Signalisierungswortes in jedem geradzahligen Überrahmen abwechselnd seine Information wechselt. Reicht die Anzahl der durch die 4 Bit langen Signalisierungsworte darstellbaren Informationszeichen nicht aus, so kann der Zeichenumfang durch Hinzufügen von weiteren 4 Bit entsprechend vergrößert werden. Die Übermittlung geschieht dabei jeweils in zwei aufeinanderfolgenden Überrahmen. Zur Erkennung des jeweils ersten Teils des 8 Bit langen Signalisierungswortes wird das Vorzeichenbit entsprechend geändert.

Eine Weiterbildung der Erfindung besteht auch darin, daß auf eine Anschlußleitung jeweils Datenworte mehrerer Zeitkanäle eines Rahmens durch den Leitungsverzweiger übertragen werden und umgekehrt. Zum Anschluß einer kleinen Nebenstellenanlage an eine Anschlußleitung ist es möglich, die betreffende Anschlußleitung nicht als Einkanalleitung sondern beispielsweise als Vierkanalleitung zu betreiben.

Die Erfindung wird anhand eines Ausführungsbeispiels näher erläutert, welches in der Zeichnung dargestellt ist. Es zeigt

Fig. 1 das Blockschaltbild einer Vermittlungsanlage mit digitalen Fernsprechteilnehmerstationen und

Fig. 2 den Aufbau eines Rahmens auf einer Anschlußleitung und die Übertragung der darin enthaltenen Informationen auf einen Rahmen bzw. Überrahmen auf dem PCM-Leitungssystem.

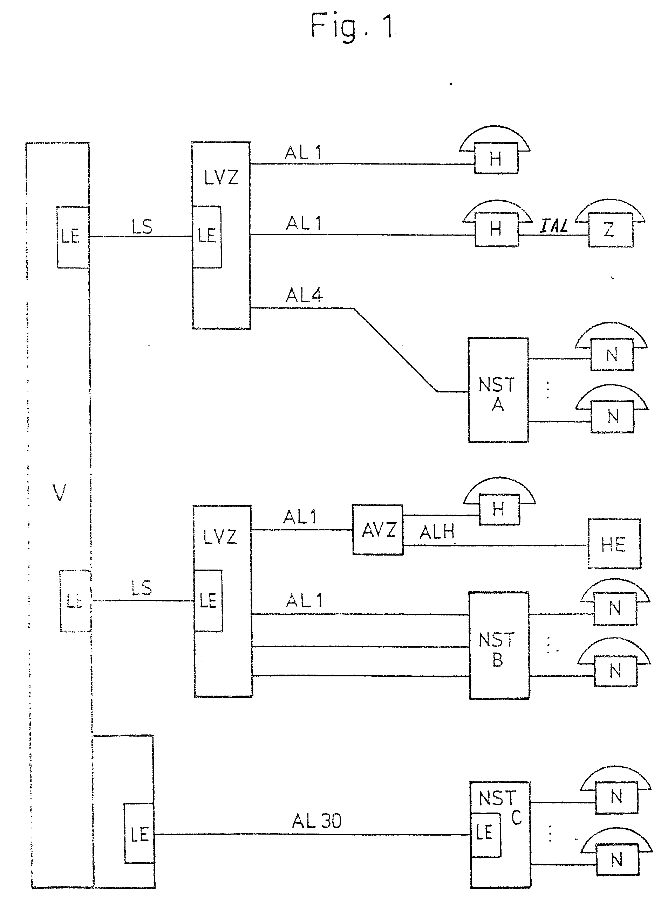

In Fig. 1 wird eine Vermittlungsstelle V gezeigt, an welcher über PCM-Leitungssysteme LS Leitungsverzweiger LVZ angeschlossen sind. Bei den PCM-Leitungssystemen LS handelt es sich um normale PCM-30-Systeme.

Der Anschluß von digitalen Fernsprechteilnehmerstationen, welche als Hauptanschlüsse H betrieben werden und der Anschluß von Nebenstellenanlagen NST erfolgt über die Anschlußleitungen AL. Diese können nun entweder als sogenannte Einkanalanschlußleitungen AL1 oder auch als

3

**0 018 526**

Mehrkanalanschlußleitungen AL4 betrieben werden.

Für die auf dem PCM-Leitungssystem LS eintreffenden PCM-Worte ist der Leitungsverzweiger LVZ mit einem Demultiplexer ausgestattet, welcher die auf den einzelnen Zeitkanälen eintreffenden PCM-Worte auf die Anschlußleitungen entsprechend verteilt. Für die auf den Anschlußleitungen ankommenden PCM-Worte ist ein Multiplexer im Leitungsverzweiger LVZ vorhanden, welcher diese auf die entsprechenden Zeitkanäle des PCM-Leitungssystems LS umsetzt. Weiterhin sind Einrichtungen im Leitungsverzweiger LVZ vorhanden, welche die in den Signalisierungskanälen des PCM-Leitungssystems LS übermittelten Informationen auf die entsprechenden Anschlußleitungen AL weitergeben und umgekehrt die auf diesen eintreffenden Informationen auf die zugeordneten Signalisierungskanäle des PCM-Leitungssystems LS umsetzen.

An den Anschlußleitungen (Einkanalanschlußleitungen AL1) kann nun eine digitale Fernsprechteilnehmerstation als einfacher Hauptanschluß angeschlossen sein. Ebenso ist es möglich, diesem Hauptanschluß einen Zweitapparat Z nachzuschalten. Die digitale Fernsprechteilnehmerstation ist in jedem Fall mit einem weiteren Klemmenpaar ausgestattet, an welchem über eine interne Anschlußleitung IAL ein Zweitapparat angeschlossen werden kann, dabei erfolgt die Übertragung aller auf der Anschlußleitung ankommenden Informationen auch auf die interne Anschlußleitung IAL und umgekehrt. Es ist somit auch möglich, den Zweitapparat Z als Nebenstelle zu betreiben. An die interne Anschlußleitung IAL können zusätzlich auch ein Zweitwecker, ein Telefonanrufbeantworter oder auch Datenendgeräte wie beispielsweise Datensichtstationen, Faksimilegeräte oder ähnliches angeschlossen werden. Ein Hauptanschluß H kann auch als reiner Datenanschluß betrieben werden, wobei anstelle der digitalen Fernsprechteilnehmerstation ein entsprechendes Datenendgerät tritt. Als Schnittstelle zur Anschlußleitung wird dabei zweckmäßigerweise ein entsprechender Modem verwendet.

Bisher wurde davon ausgegangen, daß zur Übermittlung von Informationen, gleichgültig ob es sich dabei um Sprachsignale oder andere digitale Informationen handelt, jeweils das Format von PCM-Worten von 8 Bit-Länge auf der Anschlußleitung benutzt wurde. Durch die Einführung eines zusätzlichen Dienstkanals auf der Anschlußleitung, lassen sich auch weitere einem Hauptanschluß zugeordnete Einrichtungen betreiben. Bei diesen Einrichtungen kann es sich beispielsweise um Einbruchs-, Feuer- oder Notruf-Melder, um eine selbsttätige Zählerablesung von Haushaltszählern oder auch eine Sirenensteuerung handeln. Die Einfädelung des zusätzlichen Dienstkanals in die Anschlußleitung erfolgt durch einen in dieselbe eingeschleiften Anschlußverzweiger AVZ. Da die Speisung der an den Anschlußleitungen angeschlossenen Einrichtungen über die Anschlußleitung selbst erfolgt, wird der Anschlußverzweiger AVZ zur Vermeidung zusätzlicher Belastungen mit einer eigenen Speisung versehen, wobei bei Ausfall derselben die Anschlußleitung zum Hauptanschluß selbsttätig durchgeschaltet wird.

Nebenstellenanlagen NST können nun entweder über eine Anschlußleitung (Mehrkanalanschlußleitung AL4) mit entsprechend mehreren Kanälen (Nebenstellenanlage NST A), über mehrere Einkanalanschlußleitungen AL1 (Nebenstellenanlage NST B) oder auch über ein PCM-Leitungssystem AL30 (Nebenstellenanlage NST C) angeschlossen werden.

Die Nebenstellenanlage NST selbst kann nun entweder als rein digitale Nebenstellenanlage mit digitalen Nebenstellen N oder auch als analoge Nebenstellenanlage mit entsprechenden Schnittstellen für die Anschlußleitung AL ausgebildet sein. Die Speisung der Nebenstellenanlage NST erfolgt durch eigene Speisung, bei deren Ausfall in bekannter Weise eine Nebenstelle mit der Anschlußleitung selbsttätig als Hauptanschluß verbunden wird.

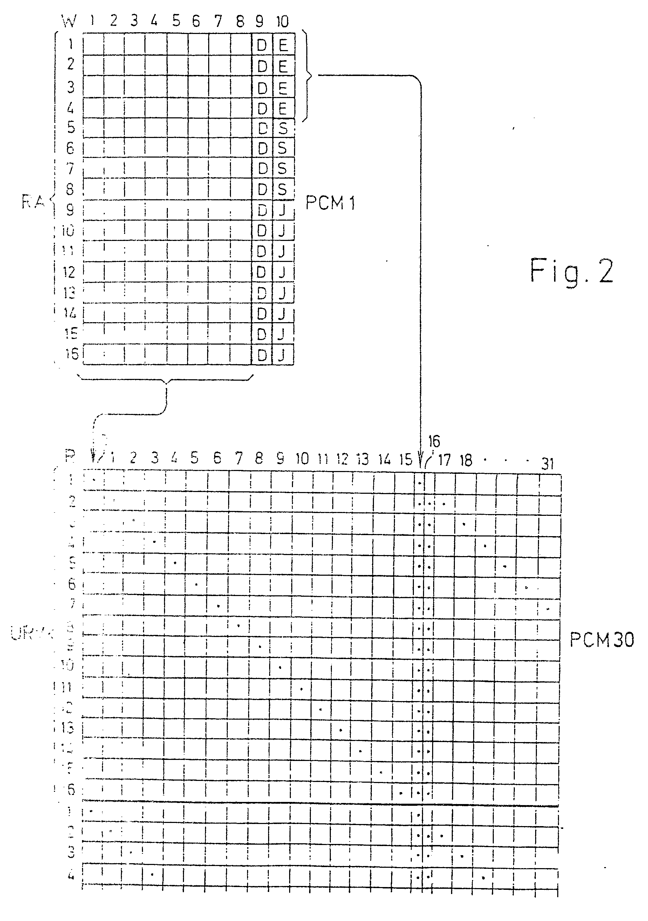

Im Gegensatz zum PCM-Leitungssystem LS auf welchem PCM-Worte mit einer Länge von 8 Bit verwendet werden, beträgt die Wortlänge der auf den Anschlußleitungen AL übertragenen Informationen 10 Bit, wobei 8 Bit das eigentliche PCM-Wort beinhalten, während die beiden zusätzlichen Bit-Stellen zur Übermittlung weiterer Informationen benutzt werden. In Fig. 2 ist ein Rahmen RA bestehend aus 16 Worten W mit je 10 Bit-Stellen für eine Einkanalanschlußleitung dargestellt. Dieses Datenformat wird ebenfalls auf den internen Anschlußleitungen verwendet. Bei einer Rahmenlänge von 16 Worten stehen 32 Bit-Stellen zur Übermittlung zusätzlicher Informationen zur Verfügung. Diese können beispielsweise folgendermaßen aufgeteilt werden:

4 Bit für externe Signalisierungszeichen E,
4 Bit für Synchronisationszeichen S,
8 Bit für interne Signalisierungszeichen I und
16 Bit für den Dienstkanal D.

Die internen Signalisierungszeichen I und die Synchronisationszeichen S werden nur zum Betrieb von Einrichtungen benötigt, welche an der internen Anschlußleitung IAL angeschlossen sind. Da jedoch alle Informationen auf dieser internen Anschlußleitung IAL auch auf die Anschlußleitung AL weitergegeben werden, gelangen diese auch zum Leitungsverzweiger LVZ. Da sie jedoch dort nicht benötigt werden, werden sie von der Weitergabe an die Vermittlungsstelle V ausgeschlossen. Die externen Signalisierungszeichen E, welche für die Steuerung des Verbindungsauf- und -abbaus in der Vermittlungsstelle V benötigt werden, werden im Leitungsverzweiger LVZ dem der jeweiligen

4

Verbindung zugeordneten Signalisierungskanal übertragen. Da bekanntlich bei einem PCM-30-System jedem Zeitkanal innerhalb eines Überrahmens URV, bestehend aus 16 Einzelrahmen R, ein Signalisierungskanal von einer Länge von 4 Bit bereitsteht, lassen sich ohne Schwierigkeiten die 4 Bit der externen Signalisierungszeichen E in den betreffenden Signalisierungskanal des PCM-Leitungssystems übertragen.

Ist für eine Übertragung von externen Signalisierungszeichen E eine Wortbreite von 4 Bit nicht ausreichend, so kann der Zeichenvorrat durch die Verwendung von 8 Bit langen Signalisierungsworten entsprechend vergrößert werden, indem jeweils eine Hälfte in einem von einem Überrahmen URV übertragen werden, wobei jeweils zwei Überrahmen URV einen Doppelüberrahmen bilden. Die Kennzeichnung der jeweils ersten Worthälfte kann beispielsweise dadurch geschehen, daß das Vorzeichenbit des Signalisierungswortes in jedem geradzahligen Überrahmen abwechselnd seine Information wechselt.

Wegen der Vielzahl der Anschlußleitungen werden für diese aus wirtschaftlichen Gründen keine hochwertigen Leitungen verwendet, außerdem besteht auf den Anschlußleitungen AL in Gegensatz zu den PCM-Leitungssystemen LS eine höhere Gefahr der Einstreuung von Störungen, die eine Verfälschung des Informationsinhaltes der einzelnen Datenworte zur Folge haben könnte. Durch Bereitstellung von weiteren 4 Bit für die Übermittlung von Synchronisationszeichen, so daß im Ganzen 8 Bit innerhalb eines Rahmens RA auf der Anschlußleitung AL zur Verfügung stehen (externe Synchronisation ES-4 Bit und interne Synchronisation IS-4 Bit), kann dieses Problem gelöst werden. Auf diese Weise wird eine schnelle Synchronisierbarkeit erreicht.

Der Dienstkanal D dient zur Übermittlung von zusätzlichen Daten zum Betreiben von Zusatzeinrichtungen, wobei die Übertragung gleichzeitig mit Sprachinformationen erfolgen kann. Die 16 Bit eines Rahmens RA werden im Leitungsverzweiger LVZ auf einem weiteren freien Zeitkanal übermittelt. Da mit den 16 Bit des Dienstkanals D jeweils nur 2 Zeitkanäle innerhalb eines Überrahmens URV belegt werden, können die restlichen 14 Zeitkanäle mit Dienstkanälen anderer Anschlußleitungen AL belegt werden. Dies kann entweder dadurch geschehen, daß im Leitungsverzweiger ein beliebiger freier Zeitkanal hierfür ausgewählt wird, wodurch sich jedoch eine komplizierte Steuerstruktur ergibt, oder daß generell im PCM-Leitungssystem bestimmte Zeitkanäle für die Übermittlung von Dienstkanalinformationen festgelegt sind. Dadurch wird zwar eine Einschränkung der zur Sprachübertragung bereitstehenden Zeitkanäle verursacht, die Steuerung innerhalb des Leitungsverzweigers LVZ wird jedoch einfacher.

Die Anschlußleitungen AL (Fig. 1) sind als zweiadrige Leitungen ausgebildet und werden im Vollduplex-Verkehr betrieben. Dies bedeutet, daß die Schnittstellen (Leitungsschaltung LE) der Anschlußleitung im Leitungsverzweiger LVZ und in der digitalen Fernsprechteilnehmerstation mit entsprechenden Zeitgabeln ausgestattet sind. Die Übermittlung der einzelnen Datenworte von 10 Bit-Länge auf der Anschlußleitung AL geschieht in der Weise, daß jeweils ein Datenwort in einer Richtung übermittelt wird und anschließend ein Datenwort in umgekehrter Richtung übertragen wird, so daß jeweils sofort nach Beendigung der Aussendung eines Datenwortes die Empfangseinrichtung der aussendenden Seite aktiviert wird. Sobald ein Datenwort von der Gegenstelle eingetroffen ist, kann mit der Aussendung des nächsten Datenwortes begonnen werden. Zur Sicherstellung eines zuverlässigen Betriebes aller Einrichtungen werden die Signalisierungsinformationen jeweils mehrmals hintereinander ausgesendet und zwar so lange, bis von der Gegenstelle der Empfang quittiert worden ist. Die Übertragungsgeschwindigkeit ist wegen der durch die Leitungslänge entstehenden Laufzeiten entsprechend höher zu wählen. Die Abwicklung eines Vollduplex-Verkehrs auf einer zweiadrigen digitalen Anschlußleitung ist beispielsweise in den Proceedings 1978 International Zürich Seminar on Digital Communications auf den Seiten C5.1 bis C5.4 beschrieben.

## Patentansprüche

1. Verfahren zum Betreiben von digitalen Hauptanschlüssen (H) und/oder Nebenstellenanlagen (NST) an einer PCM-Vermittlungsstelle (V), wobei deren Anschlußleitungen (AL) an Leitungsverzweigern (LVZ) angeschlossen sind und jeweils ein Leitungsverzweiger eine Leitungsschaltung (LE) als Schnittstelle zum PCM-Leitungssystem (LS) zur Verbindung mit der Vermittlungsstelle (V) aufweist und die Zeitkanäle des PCM-Leitungssystems durch einen Demultiplexer aufgeteilt und die darin enthaltenen Informationen auf die betreffenden Anschlußleitungen (AL) weitergegeben und die auf diesen eintreffenden Informationen durch einen Multiplexer dem betreffenden Zeitkanal des PCM-Leitungssystem übermittelt werden, und mit den an den Anschlußleitungen (AL) angeschlossenen Hauptanschlüssen (H) und/oder Nebenstellenanlagen Zusatzeinrichtungen (z. B. Zweitapparate Z, Nebenstellen N, usw.) über interne Anschlußleitungen (IAL) verbunden sind und alle auf der Anschlußleitung (AL) ankommenden Informationen auf die interne Anschlußleitung (IAL) weitergegeben werden und umgekehrt, wobei auf den Anschlußleitungen (AL) Datenworte übermittelt werden, welche jeweils aus einem PCM-Wort und weiteren Bit-Stellen zur Übermittlung zusätzlicher Informationen (z. B. Synchronisationszeichen, Signalisierungszeichen, Gebührenimpulse) bestehen und die Bit-Rate auf den Anschlußleitungen (AL) entsprechend höher liegt als die normale Übertragungsgeschwindigkeit auf PCM-Ein- oder Mehrkanalleitungen und die Signalisierungszeichen auf dem PCM-Leitungssystem (LS) in beiden Richtungen in dem betreffenden Signalisierungskanal übertragen werden, während die auf der Anschlußleitung (AL) benötigten Synchronisationszeichen von der Weitergabe auf das PCM-Leitungssystem (LS) ausgeschlossen sind, dadurch gekennzeichnet, daß auf den Anschlußleitungen (AL) und den internen Anschlußleitungen (IAL) das gleiche Rahmenformat benutzt wird, wobei die zusätzlichen Bit-Stellen zur Übermittlung von internen Signalisierungszeichen (I), externen Signalisierungszeichen (E), Synchronisationszeichen (S, ES, IS) und eines zusätzlichen Dienstkanals (D) für die Übertragung auf den Anschlußleitungen (AL) und den internen Anschlußleitungen (IAL) bereitgestellt werden, wobei die internen Signalisierungszeichen (I), die nur auf der internen Anschlußleitung (IAL) benutzt werden, und die Synchronisationszeichen (S, ES, IS) von der Weitergabe an die Vermittlungsstelle im Leitungsverzweiger (LVZ) ausgeschlossen sind, während der Dienstkanal (D) auf einen Zeitkanal des PCM-Leitungssystems (LS) umgesetzt wird und umgekehrt.

2. Verfahren nach Anspruch 1, dadurch gekennzeichnet, daß die durch die beiden zusätzlichen Bit-Stellen innerhalb eines Rahmens (RA), gebildet aus 16 Datenworten, vorhandenen 32 Bit-Stellen übertragbaren Informationen folgendermaßen aufgeteilt sind:

a) externe Signalisierung (E)   —  4 Bit
b) interne Signalisierung (I)   —  8 Bit
c) Synchronisationszeichen (S)   —  4 Bit
d) Dienstkanal (D)   —  16 Bit.

3. Verfahren nach Anspruch 1, dadurch gekennzeichnet, daß die durch die beiden zusätzlichen Bit-Stellen innerhalb eines Rahmens (RA), gebildet aus 16 Datenworten, vorhandenen 32 Bit-Stellen übertragbaren Informationen folgendermaßen aufgeteilt sind:

a) externe Signalisierung (E)   —  4 Bit
b) interne Signalisierung (I)   —  4 Bit
c) externe Synchronisation (ES)   —  4 Bit
d) interne Synchronisation (IS)   —  4 Bit
e) Dienstkanal (D)   —  16 Bit,

wobei die unter b) und d) aufgeführten Informationen von der Weitergabe an die Vermittlungsstelle (V) ausgeschlossen sind.

4. Verfahren nach Anspruch 1, dadurch gekennzeichnet, daß der Dienstkanal (D) durch einen in die Anschlußleitung (AL) eingeschleiften Anschlußverzweiger (AVZ) hinzugefügt oder ausgeblendet wird und die auf dem Dienstkanal (D) übertragbaren Informationen auf eine besondere Leitung (ALH) einer oder mehreren, dem betreffenden Hauptanschluß (H) zugeordneten Einrichtungen (HE) übermittelt werden und die von dort eintreffenden Informationen au auf dem Dienstkanal (D) weitergegeben werden.

5. Verfahren nach Anspruch 1, dadurch gekennzeichnet, daß für die externe Signalisierung (E) 8 Bit verwendet werden und zur Übermittlung an die Vermittlungsstelle (V) auf dem PCM-Leitungssystems (LS) jeweils ein doppelter Überrahmen (URV) benutzt wird, wobei das Vorzeichenbit des Signalisierungswortes in jedem geradzahligen Überrahmen abwechselnd seine Information wechselt.

6. Verfahren nach Anspruch 1, dadurch gekennzeichnet, daß auf einer Anschlußleitung (AL4) jeweils die Datenworte mehrerer Zeitkanäle eines Rahmens (RAL) durch den Leitungsverzweiger (LVZ) übertragen werden und umgekehrt.

7. Verfahren nach einem der Ansprüche 1 bis 4, dadurch gekennzeichnet, daß die Dienstkanäle (D) mehrerer Anschlußleitungen (AL) auf einem gemeinsamen Zeitkanal des PCM-Leitungssystems (LS) zur Vermittlungsstelle (V) übertragen werden und umgekehrt.

8. Verfahren nach Anspruch 7, dadurch gekennzeichnet, daß für die Übermittlung von Informationen der Dienstkanäle (D) innerhalb des PCM-Leitungssystems (LS) bestimmte Zeitkanäle festgelegt sind, welche von der Übermittlung von PCM-Worten ausgeschlossen sind, wobei die Dienstkanäle (D) einer bestimmten Anzahl von Anschlußleitungen (AL) jeweils durch einen festzugeordneten Zeitkanal übermittelt werden.

9. Verfahren nach einem der Ansprüche 1 bis 8, dadurch gekennzeichnet, daß Signalisierungsinformationen auf den Anschlußleitungen (AL) jeweils mehrmals hintereinander ausgesendet werden und zwar so oft, bis sie von der Gegenstelle quittiert werden.

## Claims

1. Method of operating digital main terminals (H) and/or branch exchanges (NST) connected to a PCM exchange (V), whereby the subscribers lines (AL) are connected with line distributors (LVZ) each having a line circuit (LE) as interface to the PCM-line system (LS) for the connection with the exchange (V) and the time slots of the PCM-line system are distributed by a demultiplexer and the contained information is retransmitted to the concerning subscriber's lines (AL) and the incoming information on the subscriber's lines (AL) is retransmitted via the concerning time slots of the PCM-line system by a multiplexer, and additional equipment (for example second telephone station (Z), extensions (N), etc) is connected via internal terminal lines (IAL) with the main terminals (H) and/or branch exchanges (NST) of the subscriber's lines (AL), and all information coming in on the subscribers line (AL) is retransmitted on the internal terminal line (IAL) and vice versa, whereby on the subscriber's lines (AL) data words are transmitted each consisting of a PCM-word and additional bit for the transmission of additional information (for example synchronisation signals, signalling signals, metering pulses, etc) and the bit rate on the subscriber lines (AL) is higher than the normal transmission rate on the one or multiple channel PCM-lines and the signalling signals are transmitted via the PCM-line system (LS) in both directions in the respective signalling time slots whereas the synchronisation signals of the subscriber's lines (AL) are excluded from the transmission on the PCM-line system (LS), characterized in, that the same frame format is used both on the subscriber's lines (AL) and the internal terminal line, whereby the additional bit are provided for the transmission of internal signalling signals (I), external signalling signals (E), synchronisation signals (S, ES, IS) and one additional service channel (D) on the subscriber's lines (AL) and the internal terminals lines (IAL), whereby the internal signalling signals (I) which are being used exclusively on the internal terminal line (IAL) and the synchronisation signals (S, ES, IS) are excluded from the retransmission to the exchange (V) in the line distributor (LVZ), whereas the service channel (D) is transposed to a time slot of the PCM-line system (LS) and vice versa.

2. Method according to claim 1, characterized in, that the inforrmation transmitted by the two additional bit within a frame (RA) of 16 data words i. e. by 32 bit is subdivided as follows:

a) externalsignalling (E)      — 4 bit
b) internal signalling (I)      — 8 bit
c) synchronisation (S)      — 4 bit
d) service channel (D)      — 16 bit.

3. Method according to claim 1, characterized in, that the information transmitted by the two additional bit within a frame (RA) of 16 data words, i. e. 32 bit is subdivided as follows:

a) external signalling (E)      — 4 bit
b) internal signalling (I)      — 4 bit
c) external synchronisation (ES)      — 4 bit
d) internal synchronisation (IS)      — 4 bit
e) service channel (D)      — 16 bit

whereby the information of b) and d) is excluded from the retransmission to the exchange (V).

4. Method according to claim 1, characterized in, that the service channel (D) is added or cut out by a terminal distributor (AVZ) which islooped-in the subscriber's line (AL) and the information of the service channel (D) is transmitted via a special line (ALH) of equipment (HE) of the main terminal (H) and vice versa.

5. Method according to claim 1, characterized in, that 8 bit are used for the external signalling (E) and each a double multiple frame (URV) is used for the transmission to the exchange (V) via the PCM-line system (LS), whereby the polarity bit of the signalling word changes its information within each even multiple frame (URV).

6. Method according to claim 1, characterized in, that the data words of several time slots of each frame (RA) are transmitted by the line distributor (LVZ) and vice versa.

7. Method according to one of claims 1 to 4, characterized in, that the service channels (D) of serveral subscribers lines (AL) are retransmitted via a common time slot of the PCM-line system (LS) to the exchange (V) and vice versa.

8. Method according to claim 7, characterized in, that distinct time slots of the PCM-line system (LS) are determined for the retransmission of the information of the service channels (D), which are excluded from the retransmission of PCM-words, whereby the service channels (D) of a distinct number of subscribers lines (AL) each are transmitted via a determined time slot.

9. Method according to one of claims 1 to 8, characterizied in, that the transmission of signalling information is repeated several times as long as it is acknowledged by the receiving end.

## Revendications

1. Procédé pour gérer des reccordements principaux numériques (H) et/ou des centraux secondaires (NST) reliés à un central téléphonique MIC (V), dans lequel leurs lignes de raccordement (AL) sont reliées à des dérivateurs de ligne (LVZ) et chaque dérivateur de ligne présente un commutateur de

**0 018 526**

lignes (LE) servant d'interface avec le système de ligne MIC (LS) pour la liaison avec le central (V) et les canaux temporels du système de ligne MIC sont éclatés par un démultiplexeur et les informations qui y sont contenues sont transmises sur les lignes de raccordement (AL) concernées et les informations entrant dans ces lignes sont transmises par un multiplexeur au canal temporel concerné du système de ligne MIC, et les équipements supplémentaires (par exemple des appareils secondaires Z, des postes secondaires N, etc . . .) sont reliés aux raccordements principaux (H) et/ou aux centraux secondaires, reliés aux lignes de raccordement (AL) par des lignes de raccordement internes (IAL) et toutes les informations parvenant sur la ligne de raccordement (AL) sont transmises sur la ligne de raccordement interne (IAL) et inversement, des mots de données étant transmis sur les lignes de raccordement (AL), qui sont constitués chacun d'un mot MIC et d'autres positions de bits pour la transmission d'informations supplémentaires (par exemple des signaux de synchronisation, des signaux de signalisation, des impulsions de taxes) et le débit en bits sur les lignes de raccordement (AL) étant plus élevé que la vitesse normale de transmission sur des lignes MIC mono- ou multi-canaux, et les signaux de signalisation étant transmis sur le système de ligne MIC (LS) dans les deux sens dans le canal de signalisation concerné, alors que les signaux de synchronisation nécessaires sur la ligne de raccordement (AL) sont exclus du transfert sur le système de ligne MIC (LS), procédé caractérisé en ce que le même format de trame est utilisé sur les lignes de raccordement (AL) et les lignes de raccordement internes (IAL), les positions de bits supplémentaires étant mises à disposition pour la transmission de signaux de signalisation internes (I), des signaux de signalisation externes (E), des signaux de synchronisation (S, ES, IS) et des signaux provenant d'un canal de service supplémentaire (D) pour la transmission sur les lignes de raccordement (AL) et les lignes de raccordement internes (IAL), les signaux de signalisation internes (I), qui sont utilisés seulement sur les lignes de raccordement internes (IAL), et les signaux de synchronisation (S, ES, IS) étant exclus du transfert vers le central dans le dérivateur de ligne (LVZ), alors que le canal de service (D) est transposé sur un canal temporel du système de ligne MIC (LS) et inversement.

2. Procédé selon la revendication 1, caractérisé en ce que les informations transmissibles par les deux positions de bits supplémentaires à l'intérieur d'une trame (RA) formée de 16 mots de données, constituant 32 positions de bits, sont réparties comme suit:

a) signalisation externe (E) — 4 bits
b) signalisation interne (I) — 8 bits
c) signaux de synchronisation (S) — 4 bits
d) canal de service (D) — 16 bits.

3. Procédé selon la revendication 1, caractérisé en ce que les informations transmissibles par les deux positions de bits supplémentaires à l'intérieur d'une trame (RA) formée de 16 mots de données, constituant 32 positions de bits, sont réparties comme suit:

a) signalisation externe (E) — 4 bits
b) signalisation interne (I) — 4 bits
c) synchronisation externe (ES) — 4 bits
d) synchronisation interne (IS) — 4 bits
e) canal de service (D) — 16 bits,

les informations indiquées en b et d étant exclues du transfert vers le central (V).

4. Procédé selon la revendication 1, caractérisé en ce que le canal de service (D) est rajouté ou supprimé par un dérivateur de raccordement (AVZ) inséré dans la ligne de raccordement (AL) et que les informations transmissibles sur le canal de service (D) sont envoyées sur une ligne particulière (ALH) à un ou plusieurs équipements (HE) associés au raccordement principal (H) concerné et les informations qui en partent, transmises sur le canal de service.

5. Procédé selon la revendications 1, caractérisé en ce qu'on utilise 8 bits pour la signalisation externe (E) et qu'on utilise chaque fois une double sur-trame (URV) pour la transmission vers le central (V) sur le système de ligne MIC (LS), le bit de signe du mot de signalisation modifiant son information de façon alternée dans chaque sur-trame paire.

6. Procédé selon la revendication 1, caractérisé en ce que les mots de données de plusieurs canaux temporels d'une trame (RA) sont transmis chaque fois sur une ligne de raccordement (AL4) à travers le dérivateur de ligne (LVZ) et inversement.

7. Procédé selon l'une des revendications 1 à 4, caractérisé en ce que les canaux de service (D) de plusieurs lignes de raccordement (AL) sont transmis vers le central (V) sur un canal temporel commun du système de ligne MIC (LS), et inversement.

8. Procédé selon la revendication 7, caractérisé en ce que, pour la transmission d'informations des canaux de service (D) à l'intérieur du système de ligne MIC (LS), des canaux temporels déterminés sont fixés, qui sont exclus de la transmission des mots MIC, les canaux de service (D) d'un nombre déterminé de lignes de raccordement (AL) étant chaque fois transmis par un canal temporel associé de façon définitive.

8

9. Procédé selon l'une des revendications 1 à 8, caractérisé en ce que les informations de signalisation sont émises chaque fois plusieurs fois de suite sur les lignes de raccordement (AL), et ceci jusqu'à ce qu'elles aient été confirmées par le poste opposé.

# Fig. 1

Fig. 2